# EUROPEAN PATENT APPLICATION

(11) **EP 4 194 180 A1**
(43) Date of publication of application: **14.06.2023**
(21) Application number: 22210359.0
(22) Date of filing: 29.11.2022
(51) Int. Cl.: B29C 64/153, B22F 10/14, B22F 12/48, B29C 64/165, B29C 64/232, B33Y 10/00, B33Y 40/10, B22F 10/85

(54) **METHOD FOR AN APPARATUS FOR THE LAYERWISE MANUFACTURE OF 3D OBJECTS FROM PARTICULATE MATERIAL**

(30) Priority: 13.12.2021 GB 202118034
(71) Applicant: Stratasys Powder Production Ltd, London SW1H 0BL (GB)
(72) Inventor: LANGE, Torben, London, SW1H 0BL (GB); HARTMANN, Anders, London, SW1H 0BL (GB); PLEASS, Christopher, London, SW1H 0BL (GB)
(74) Representative: Pitchford, James Edward

(57) **Abstract**

Provided is a method for the layer-by-layer manufacture of an object from particulate material, the method comprising the steps of: (a) distributing a layer of particulate material over a build bed, the layer forming a build bed surface and having a layer thickness; (b) preheating the layer to a preheat temperature; (c) heating a cross section of the object of the layer to at least a sintering temperature to cause the particulate material of the cross section to start to melt; (d) lowering the build bed by a layer distance; and (e) repeating steps (a) to (d) to form each layer until the object is complete, each layer forming a new build bed surface, wherein steps (a) to (d) represent an object layer cycle; wherein for at least some of the layers, the layer distance decreases non-linearly with the number of preceding layers, and such that each layer is of substantially the intended layer thickness. Further provided is a controller for carrying out the method and an apparatus comprising the controller.

## Description

### FIELD OF THE INVENTION

The present disclosure relates to a method for the layer-by-layer manufacture of three-dimensional (3D) objects from particulate material. The method might find particular benefit in apparatus applying heat to consolidate the particulate material. A controller and an apparatus for applying the method are also disclosed.

### BACKGROUND

In applications for forming 3D objects from particulate material, such as powder bed fusion applications like "print and sinter" and laser sintering, an object is formed layer-by-layer from particulate material spread in successive layers across a support. Each successive layer of the object is melted, or partially melted, to fuse or sinter the particulate material over defined regions and, in so doing, to consolidate it, in order to form a cross section of the 3D object. In the context of particulate polymer materials for example, the process of melting achieves fusion of particles. Such a process requires accurate control to provide uniform objects with well-defined dimensions and properties. Regarding dimensional accuracy, it is known that the thermal conditions of powder bed fusion applications can lead to warping and shrinkage if the process is not carefully controlled. Regarding shrinkage of the fused areas this may in part be controlled by improving thermal uniformity cross the layer. However, along the layering direction, compensation methods are often necessary to ensure that the final object size is substantially as expected. A 'digital adjustment' may for example be made at the processing stage of the object bitmap used to define layer by layer processing instructions. Digital adjustment may be achieved by determining a compensated model of the object derived from empirical data that takes into account shrinkage and creating layer by layer processing instructions based on the compensated object model. In printing technologies in which the object is not supported by a powder bed but for example by sacrificial supports, distortion due to compression may be another concern, however this appears to be less of an issue in powder bed fusion where the object is homogenously supported and surrounded by hot particulate material. For powder bed fusion applications, it was found that digital compensation is not able to address some of the effects of deformation caused by shrinkage. Therefore, an improved method of operation is needed that provides improved dimensional accuracy in the layering direction of a 3D object.

### SUMMARY

Aspects of the invention are set out in the appended independent claims, while particular embodiments of the invention are set out in the appended dependent claims.

The following disclosure describes, in one aspect, a method for the layer-by-layer manufacture of an object from particulate material, the method comprising the steps of: (a) distributing a layer of particulate material over a build bed, the layer forming a build bed surface and having a layer thickness; (b) preheating the layer to a preheat temperature; (c) heating a cross section of the object of the layer to at least a sintering temperature to cause the particulate material of the cross section to start to melt; (d) lowering the build bed by a layer distance; and (e) repeating steps (a) to (d) to form each layer until the object is complete, each layer forming a new build bed surface, wherein steps (a) to (d) represent an object layer cycle; wherein for at least some of the layers, the layer distance decreases non-linearly with the number of preceding layers, and such that each layer is of substantially the intended layer thickness.

In a second aspect, disclosed is a controller for an apparatus for the layer-by-layer manufacture of a 3D object from the particulate material and configured to carry out the method of the first aspect.

In a third aspect, disclosed is an apparatus for the layer-by-layer manufacture of a 3D object from the particulate material comprising the controller of the second aspect.

### BRIEF DESCRIPTION OF THE DRAWINGS

Reference is now directed to the drawings, in which:
Figure 1 is a flow chart according to the method of the invention;
Figure 2A is a schematic cross-section of detail of a side view of an apparatus configured to carry out the method according to the invention;
Figure 2B is a schematic plan view of the build bed surface of the apparatus of Figure 1A;
Figure 3 is a schematic cross-section of corrected layers in the build bed;
Figure 4 is an example curve of a progressively decreasing increment;
Figure 5 is a flowchart of a variant of the method of Figure 1; and
Figure 6 is a flowchart of a further variant of the method of Figure 1.
In the drawings, like elements are indicated by like reference numerals throughout.

### DETAILED DESCRIPTION

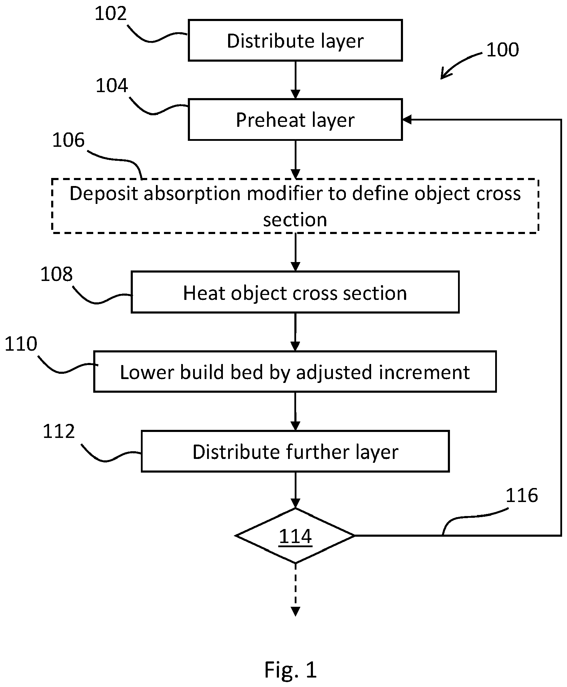

An improved method of operation for an apparatus for the layer-wise manufacture of 3D objects from particulate material, such as a powder bed fusion apparatus, will now be described with reference to Figures 1 to 6.

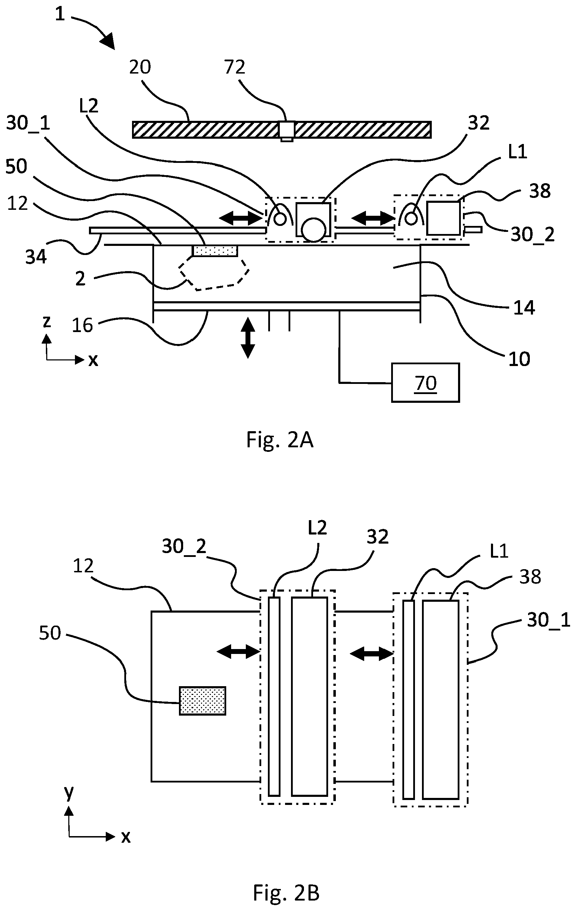

Figure 2A schematically illustrates detail of a cross section of a powder bed fusion type apparatus 1, as an example for a 3D printing apparatus, comprising a thermal sensor 72 configured to carry out the method and its variants that will now be described.

In a powder bed fusion process, successive layers of particulate material are distributed, each to form a build bed 14 supported on a platform 16. The build bed is progressively built up from individual layers each, forming a build bed surface 12 which is then processed to form successive cross-sections 50 of an object 2. In this context, the reference to the 'build bed surface' is to the surface of the topmost layer of particulate material of the build bed 14. In other words, each newly distributed layer forms a new build bed surface 12 that is the build bed surface of the layer to be processed in that particular cycle of the process.

As indicated in Figure 2A, the apparatus 1 comprises a container system, having container walls 10 and a build platform 16, that contains the object within a build bed 14 of particulate material as it is being built. The build platform 16 is arranged to move vertically along z within the container walls 10, to lower or raise the build bed surface 12, for example by a piston located beneath the platform 16. The apparatus 1 further comprises, without specifically showing, a reservoir to supply particulate material to a dosing module that doses an amount of fresh particulate material to be distributed across the build bed 14, thus forming a new build bed surface 12.

Modules for distributing the particulate material and processing each formed layer are provided on one or more carriages 30 moveable across the layer. Accordingly, for illustrative purposes, Figure 2A shows a first carriage 30_1 and a second carriage 30 2 arranged on one or more rails 34 that allow each carriage to be moved back and forth above the build bed 14. The first carriage 30_1 comprises a distribution module 32 to distribute a new layer of particulate material over the build bed 14 to form a new build bed surface 12. The distribution module 32 may for example comprise a roller, as indicated, or a blade. The second carriage 30 2 comprises a droplet deposition module 38 for selectively depositing absorption modifier over the build bed surface 12 to define a cross section of the object over the layer. The droplet deposition module may for example be a fluid deposition module such as one or more printheads, for depositing radiation absorbing fluid over a defined object cross section 50 and/or for depositing absorption inhibitor over an area surrounding the defined object cross section 50.

A heat source L1 is provided on the second carriage 30_2 to heat the object cross section 50 following deposition of the radiation absorbing fluid. The selectivity of preferentially heating the object cross section 50 versus the surrounding area is achieved by providing the heat source L1 with a spectrum of radiation that, at least partially, overlaps with the absorption spectrum of radiation absorbing fluid but that is not significantly absorbed by the particulate material alone. The radiation-absorbing fluid readily absorbs radiation from the heat source L1 and heats the particulate material it is in thermal contact with (i.e., over the object cross section 50). If the combination of absorber amount and power input to the heat source L1 causes a sufficient energy input to the object cross section 50, the particulate material of the object cross section 50 will, for example, melt/sinter to fuse and form consolidated particulate material.

In some apparatus, as exemplified in the apparatus 1 of Figures 2A and 2B, a second heat source L2 may be arranged downstream of the distribution module 32, with respect to the direction of distribution, so as to immediately preheat the layer following distribution. Providing a second moveable preheat source L2 may be an effective way of returning the temperature of the new, and, compared to the previous, processed layer, much colder layer back towards a preheat build bed temperature. This may be done in combination with, or in addition to, operating a stationary overhead heater 20 provided above the build bed surface 12. The preheat temperature may be a predetermined temperature lower than the melting temperature and higher than the solidification temperature of the particulate material. The various heat sources may be controlled in response to temperature measurements of the build bed surface 12 by a thermal sensor 72, for example located above the build bed surface 12.

Figure 2B shows a plan view of the build bed surface 12 of Figure 2A with the object cross section 50 and the first and second carriages 30_1, 30 2, with its distribution, deposition and heating modules spanning the width of the build bed surface 12 (along y). Each carriage is independently moveable back and forth along the x-axis, which herein is also referred to as the length of the build bed surface 12, the length being perpendicular to the width. Reference to length and width is however not intended to indicate relative extent of the two directions but to merely help reference directions of the process.

Applying a typical build process for an object in which the step-down in platform is constant for each layer, it was found that the final object may be significantly taller than its expected height. For example, objects that extend over 100 mm or more in height throughout the build bed, and objects of several 10s of millimetres, e.g. 40 mm, placed near the top of a build bed of around 100 mm or more in height, were found to be oversized in their finished height along the layering direction by several millimetres. Using digital compensation methods, the object data may be altered for some or all slices of the object model. Such data may comprise the amount of absorber, the inner surface region of small features such as holes, or the number of slices. Meanwhile the step-down in the platform height applied before distributing a fresh layer remains constant for each layer. However, it will be seen how such methods may not compensate for certain effects of object oversize.

The build bed surface 12 is typically maintained at a preheat temperature 10-30 °C below the sintering or melting temperature of the particulate material. In the case of polymeric particulate material such as nylon, for example of type PA11, the build bed surface 12 may be maintained at a preheat temperature of around 180 °C. The preheat temperature is chosen to be as close as possible to the melting temperature without compromising selectivity so as to avoid significant temperature differentials between molten areas that have been printed over, and areas of particulate material that are not to melt (unprinted areas). By avoiding significant temperature differentials, the occurrence of curl and warpage leading to build failure may be avoided.

Without being bound to any specific theory, it is thought that the overall height (along the layering direction) of the build bed 14 above the platform 16 compacts and densifies due to the weight of the build material above the processed layers. It is thought that this compaction progressively presents a build bed surface 12 below the anticipated level. This causes a thicker than intended layer to be distributed when the platform 16 is lowered by the intended layer thickness. Without correction, a further layer is distributed at a thickness greater than the intended thickness, causing an object dimension in the layering direction to be larger than anticipated. This deviation in thickness was found to be present within a short distance from the lowest layer at the start of a build, and to become increasingly significant as the build progresses. Therefore, progressively increasing deviations are thought to cause significant departure from the expected dimension, leading to inaccuracy in the final object dimensions along the layering direction, and potentially reducing yield if the resulting object is outside of required tolerances. For example, for an object that is around 250 mm tall, the oversize may be an additional 2-3 mm or more. Furthermore, layer thickness variations may lead to reduced consistency in the thermal treatment between layers and cause for example a reduced degree of bonding between layers as the layers get thicker towards the top of the build bed. Thus, it may be seen how digital compensation methods may be used to 'shorten' the object model so as to compensate for predicted object oversize, they cannot address the physical effects of layer thickness variations that may for example lead to cosmetic issues.

The inventors have developed a method in which, based on empirical data for example, a correction to the layer-wise step-down in the platform height may be defined and applied before the distribution of at least some of the layers. In this way, object oversize in the layering direction may be reduced or substantially prevented. This type of compensation may be applied onboard the apparatus 1, thus furthermore avoiding issues that may arise with external software used to digitally compensate at the slicing stage.

The method will now be described with reference to the flow chart of Fig. 1, and comprises the steps of:
(a) distributing, at block 102, a layer of particulate material over a build bed 14, the layer forming a build bed surface 12 and having an actual layer thickness *d*;
(b) preheating, at block 104, the layer to a preheat temperature;
(c) heating, at block 108, a cross section of the object 2 of the layer to at least a sintering or melting temperature to cause the particulate material of the cross section to sinter or melt;
(d) lowering, at block 110, the build bed 14 by a layer distance (or increment) *I* (the increment *I* herein being also referred to as "layer distance"); and
(e) distributing, at block 112, a further layer of particulate material of substantially an intended layer thickness *do,* the further layer forming the build bed surface 12;
   wherein an object layer cycle 100 comprises the steps at blocks 104 to 110; and
(f) as decided at decision point 114, repeating the object layer cycle 100 via repeat loop 116 to the total number *n* of object layers until the object 2 is complete;
   wherein the layer distance (or increment) *I* differs from the intended layer thickness *do* by a deviation or correction value, *c,* such that the further layer distributed at block 112 is of substantially the intended layer thickness *do.*

The increment *I* = *d₀-c* may further be a layer-dependent (or build height dependent) value, such that most or all object layers are distributed at the intended layer thickness *d₀.* Thus, as described herein, the increment by which the build bed 14 is lowered substantially compensates for or at least reduces deviations in actual layer thickness from the intended layer thickness *do* for all object layers of the object 2. This provides for an object height (dimension in the layering direction) that is substantially equal to, or is at least significantly reduced in its deviation from, the expected object dimensions along the layering direction z. The inventors have found that the increment *I* by which the platform is lowered may follow a progressively decreasing behaviour with the number of object layers, and optionally also of blank layers that do not contain an object cross section, of the build.

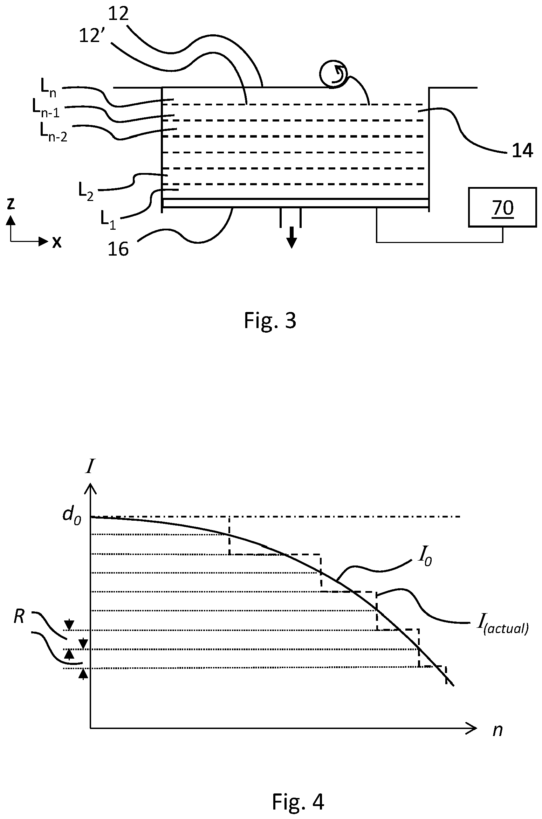

With reference to Fig. 1, the increment *I* may for example vary non-linearly, for example decrease non-linearly, such as decrease exponentially, over successive steps at block 110 of the object layer cycle 100, as the method progresses over repeated cycles along loop 116. This is illustrated in Fig. 4 by way of example by a graph of increment *I* versus layer number *n.* An ideal predicted increment *I₀* (solid curve) is shown to decrease smoothly and non-linearly, for example exponentially, with respect to that of previous layers. The intended layer thickness is indicated as *do.* It can be seen that the increment *I* deviates more and more from the intended layer thickness *do* with the number of layers *n.*

The increment *I* may thus be smaller than the intended layer thickness *do.* As the build progresses along loop 116, the platform 16 may be lowered by progressively smaller increments *I* to ensure that the actual thickness of the further distributed layers remains substantially equal to the intended layer thickness *do.* This is illustrated in Fig. 3 which is a schematic cross section of the build bed 14 supported on a platform 16 and over which successive layers *Lₙ* are distributed. The platform 16 and thus the build bed 14 are lowered after each layer has been processed (e.g., heated at block 108) by an increment *I*. In this example, the increment *I* is chosen such that the actual thickness of each distributed layer *Lₙ* is substantially the intended layer thickness. For example, due to the properties and/or thermal history of the preceding layers, the build bed surface 12' may not be flush with the top surface of the build container before being lowered, such that it may be lower than the top surface by a deviation value *c.* Therefore, before distributing the layer *Lₙ,* the build bed surface 12' of the preceding layer *Lₙ₋₁* is lowered by an increment *Iₙ*, which differs from the intended thickness *do* by a deviation value *cₙ.* The increment in this case is smaller than the intended layer thickness *do.* After lowering the preceding surface 12' by the increment *Iₙ*, the preceding build bed surface 12' is at a total lower level that substantially equals the intended layer thickness *do,* and the further distributed layer *Lₙ* is therefore distributed at substantially the intended layer thickness *do.*

The layer-wise variable increment may thus be a function of the number of layers, *Iₙ*=*f(n),* and may be determined in a number of ways, for example by applying a correction value, a correction function, a scaling operation, or a subtraction based on a deviation determined from a graph or function characterising the deviation between the intended thickness of each layer and the actual thickness of each layer in absence of applying a correction.

### Subset of layers for which the same increment is applied

Progressive adjustment to the increment with respect to the previously applied increment may be applied from the first to the last layer of the object. However, for some layers, or object layers, of the total number of layers, or object layers, the increment may not be adjusted with respect to the increment of the previous layer. For example, intermediate layers may be distributed after lowering the build bed 14 by the same increment as for the preceding layer. This may be due to limitations in resolution, or the minimum distance, by which the build bed may be lowered, as will now be described. Fig. 4 illustrates an actual adjustment in increment based on the resolution *R* in movement of a motor drive that controls the lowering of the build area 14 via the piston along z. An ideal behaviour of the increment *I₀* varying smoothly with layer number *n* is illustrated by the solid line. The dashed curve illustrates how an actual increment *I* may be vary based on discrete steps of the movement resolution *R* in platform height. The platform 16 may only be moveable along the layering direction in multiples of steps *R,* so that the ideal predicted increment for a certain layer may not be achievable. Instead, multiples of *R* may only achieve the nearest possible platform height. The movement resolution presents a threshold in minimum distance that has been, or is to be, exceeded for the further layer.

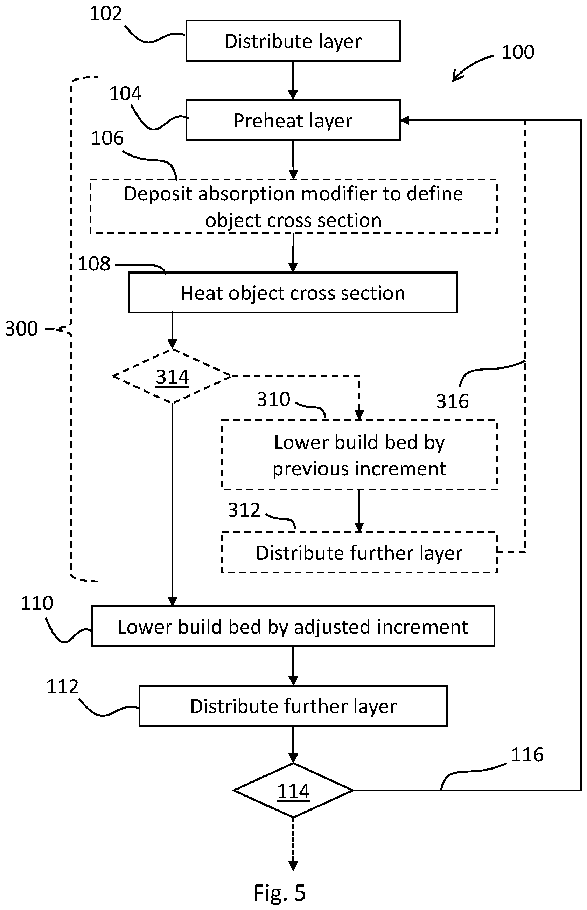

Thus, a certain number of object layers may be processed for which the build bed 14 is lowered by the same as the preceding increment value (by the same increment applied before distributing the preceding layer) to distribute a further layer, before proceeding to step (d) at block 110 of lowering the build bed 14 by an increment different to the preceding increment. Fig. 5 illustrates a corresponding variant comprising a sub-cycle 300 according to the above of the object layer cycle 100 of the flowchart of Fig. 1 to illustrate such a variant of the method. After a first layer is distributed and processed over blocks 102 to 108, the method has to pass decision point 314. If at decision point 314 it is determined that the next ideal increment is not achievable, and that a required threshold has not been exceeded, for example a movement resolution *R* is larger than the predicted deviation from the preceding applied increment, the method proceeds to block 310 of lowering the build bed by the previous actual applied increment *I* and distributing a further layer at block 312.

Next, the sub-cycle returns to block 104 of the cycle 100, of preheating the previously distributed layer, and follows again along block 108 before arriving again at decision point 314. As long as at decision point 314 it is determined that a deviation of the ideal increment for the next layer from the previously applied increment does not exceed a resolution in movement along the layering direction, the sub-cycle follows along loop 316. Thus, for one or more intermediate layers of the object build cycle 100, the object layer cycle 100 may further comprise one or more subsets of further object layer cycles 300 to distribute layers for which the increment *I* by which the build bed 14 is lowered at block 310 is substantially the same as that of the preceding layer of the subset of object layer cycles 300, so that an actual thickness *dₙ* of each layer of the subset may be different to that of one or more preceding layers, *dₙ₋₁.*

The increment may thus only be varied with respect to the preceding step (d) at block 110 after the same increment value has been applied for the subset of further, intermediate, layers. For example an adjusted increment before the further layer is distributed at block 110 may be applied after a predetermined number of layers of the subset, and/or once it is determined at decision point 314 that a threshold in deviation of the ideal increment of the next layer from the previously applied actual increment, and/or the resolution along the direction of the build bed movement by which the piston platform may be accurately moved, is to be exceeded for the further layer, has been reached, or has been exceeded. After this, the method progresses from decision point 314 to blocks 110 and 112 of the object build cycle 100, and further layers are processed along loop 116. This means that for the layers of the subset, the actual layer thickness *dₙ* of one or more of the further layers of the subset deviates from the intended layer thickness *do* since these layers are not corrected in their thickness.

The actual thickness *dₙ* of each layer of the subset may remain within a predetermined range of the intended layer thickness, for example a range based on the movement resolution *R.* The method may thus further comprise a step of determining the number of further object cycles based on at least one of the predetermined deviation from the intended layer thickness and a resolution *R* in distance along the layering direction over which the build area is lowered.

### Blank layers

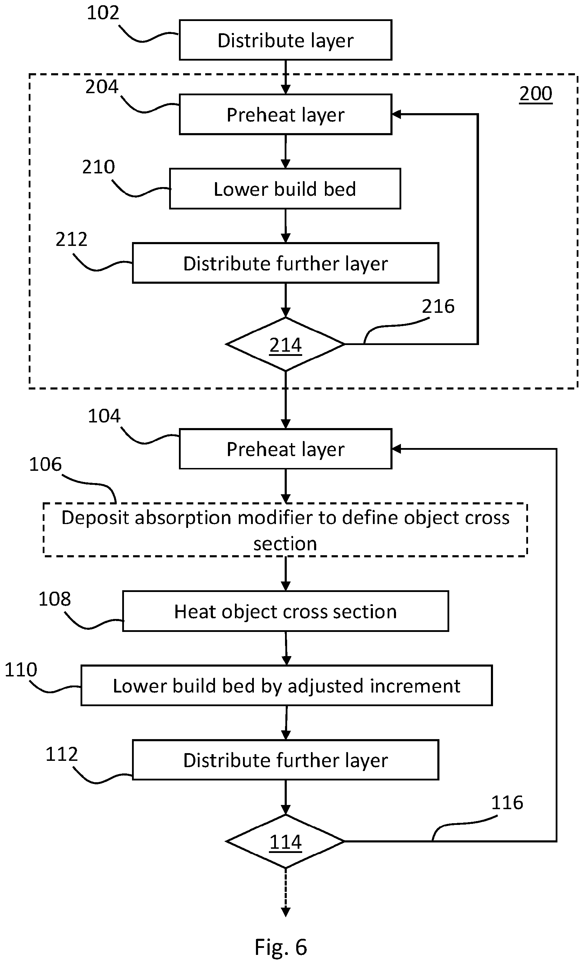

The method may further be applied to additional layers other than object layers. For example, the increment may be adjusted also for some or all blank layers that may be applied before and/or after the object layers are processed, for example so as to create uniform thermal conditions, and/or so as to separate objects built at different locations along the layering direction. This is illustrated in Fig. 6, which is a variant of the flowchart of Fig. 1 and further comprises one or more blank layer cycles 200, comprising the steps (b) of preheating the layer to a preheat temperature at block 204, the step (d) at block 210 of lowering the build bed by the increment, and the step (e) at block 212 of distributing a further layer of particulate material, the further layer forming the build bed surface 12, such that the further layer is of substantially the intended layer thickness. At decision point 214, it may be determined that further blank layers are to be distributed along loop 216, or that the object build cycle 100, along blocks 104 to 112 and along loop 116 as described for Fig. 1, is started. The blank layer cycle 200 may precede the object layer cycles as illustrated in Fig. 6, or it may additionally or instead follow the object layer cycle 100 after the required number of object layers, as determined at decision point 114, have been processed via repeat loop 116.

In variants of the method, some or all of the blank layers of blank layer cycle 200 may be distributed without applying at block 210 an adjusted increment (adjusted with respect to the previously applied increment of a preceding layer), or a correction to the increment. Instead, the same increment is applied for all blank layers and only the object build cycle 100 includes the step (d) at block 110 of lowering the build bed 14 by an increment *Iₙ* different from a previously applied increment. Thus one or more blank layer cycles 200 may precede and/or follow the object layer cycles 100, wherein the blank layer cycle comprises the steps of: preheating the blank layer to the preheat temperature at block 204, lowering the build bed by one of the intended layer thickness *do,* or by a fixed increment (fixed throughout the blank layer cycle 200) different to the intended layer thickness, at block 210, and distributing a blank layer or a further blank layer at block 212.

Thus, some or all of the blank layers may be uncorrected in their thickness and as a result may have an actual layer thickness different from the intended layer thickness.

### Increment alternatives/variants

In some variants, the increment *I* may be larger than the intended layer thickness *do.* For example, varying thermal conditions in the build bed may cause temporary swelling of the build bed that requires a different compensation in the increment. The increment may be determined as in the aforegoing variants described, with the difference that it progressively increases compared to preceding increments. In other words, the increment may equal the intended layer thickness plus a deviation value that compensates for swelling of the build bed 14. Depending on the thermal conditions throughout the process, over a portion of the build bed, the increment may progressively increase, and over a further portion of the build bed 14, the increment may progressively decrease as described above.

In variants of the aforegoing method, the intended layer thickness *do* may not be the same throughout the build bed, or it may not be the same for all of the object layers. Instead, the intended layer thickness *do* may vary for one or more further layers compared to that of the preceding layer, or to that of a subset of a plurality of preceding layers. For example, for a subset of one or more object build layers, the intended layer thickness may be different to that of other subsets of one or more the object build layers. Additionally, or instead, any blank layers may be distributed at an intended layer thickness different to that of the object layers.

### Determination of the increment

The increment by which the build area 14 is to be lowered for all or a certain number of layers of the object cycle 100 at block 110, of the blank layer cycle 200 at block 220, and and/or of the sub-cycle 300 at block 310 may be determined in a number of suitable ways. For example, a set of increments *I₍₁₋ₙ₎* may be determined empirically for a number *n* of layers from one or more test builds preceding the object build, and wherein the method may further comprise, before step (b) at block 104: providing the set of increments *I₍₁₋ₙ₎* to be applied throughout the layers of the layer cycle 100 and/or 300; determining for each layer whether a new, adjusted increment, different to the previously applied increment, is to be applied at step (d) before distributing the further layer; and applying the determined (adjusted) increment at block 110 to lower the build bed 14 preceding the distribution at block 112 of that further layer .

Alternatively, the set of increments *I₍₁₋ₙ₎* may be determined from a model based on one or more object build parameters, and the method may further comprise, before step (d) at block 104: determining the increment for each layer of the repetitions of the object layer cycle along loop 114; determining for each layer whether an adjusted increment (adjusted over the previously applied one) is to be applied at step (d) for a further layer; and applying the as determined adjusted increment at block 110 preceding the distribution at block 112 of that further layer . The increment may be determined based on per-layer data defining the cross section of the object. Additionally, or instead, the increment per layer may be determined based on, or further based on, an amount of sintered particulate material in the preceding layers preceding the further layer.

Generally, the increment may be determined per layer based on, or further based on, the number of preceding layers preceding the further layer. This may include blank layers. Alternatively, the increment may be determined per layer based on, or further based on, the number of object layer cycles.

In variants of the method, the increment may be determined per layer based on, or further based on, at least one of the preheat temperature to which the build bed surface 12 is heated at block 104; the properties of the particulate material, such as the density of the layers for a specific temperature(s); the area and/or volume of fused material in one or more, or all, preceding layers; and the area of the object cross sections in one or more, or all, preceding layers. In variants, the increment or layer distance *I* may be determined based on the number of preceding layers and/or the total height of the build volume formed by the preceding layers and a density of the particulate material, so as to calculate a compaction of the build bed due to pressure on the preceding layers. In other words, layer distance *I* may be determined based on the aggregate amount or weight per unit area of particulate material distributed.

The method may be of benefit in the operation of any powder bed fusion apparatus that applies a step of heating to form a cross section of the object 2. Heating may for example be applied by a laser that selectively scans over the area defining the cross section of the object 2. Alternatively, or additionally, an apparatus as described for Fig. 2A and 2B may be used, such that between the steps (b) of preheating and (c) of heating at blocks 104 and 108, respectively, a step of depositing absorption modifier over at least one of an area defining the cross section of the object 2 or an area surrounding the cross section of the object 2 may be carried out. This is illustrated as optional by the dashed outline of block 106 in the flowcharts of Figure 1, and in Figs. 5 and 6. For example, at block 106, radiation absorber may be selectively deposited over an area defining the cross section of the object using droplet deposition module 38. By passing a non-selective (e.g., wide beam) radiation source L1 emitting a wavelength to be preferentially absorbed by the absorber, compared to the surrounding area, over the build bed surface 12, the cross section heats up more than the surrounding area and sinters or melts. Additionally, or instead, the absorption modifier may be in the form of a coolant or reflector deposited over the area surrounding the cross section and causes the surrounding area to heat up less than the cross section.

The method and its variants as described may be carried out by a controller 70 of the apparatus 1, configured to carry out any of the method or variants in part or fully. The controller 70 may further be configured to receive per-layer increment data or correction data, and, based on a number of preceding object layer cycles, either select an increment *I*, or a correction value, from a predetermined per-layer set of increment data *I₍₁₋ₙ₎* or correction data respectively, or determine from a model the increment or a correction value to the increment that is to be applied at step (d). The controller may further be configured to control a vertical movement of the build bed 14 and to apply the so-determined increment *I* at step (d).

## Claims

1. A method for the layer-by-layer manufacture of an object from particulate material, the method comprising the steps of:
(a) distributing a layer of particulate material over a build bed, the layer forming a build bed surface and having a layer thickness;
(b) preheating the layer to a preheat temperature;
(c) heating a cross section of the object of the layer to at least a sintering temperature to cause the particulate material of the cross section to start to melt;
(d) lowering the build bed by a layer distance; and
(e) repeating steps (a) to (d) to form each layer until the object is complete, each layer forming a new build bed surface, wherein steps (a) to (d) represent an object layer cycle;
wherein for at least some of the layers, the layer distance decreases non-linearly with the number of preceding layers, and such that each layer is of substantially the intended layer thickness.

2. The method of claim 1, further comprising distributing one or more blank layers by carrying out the steps (a), (b) and (d), wherein the blank layers precede and/or follow the object layers.

3. The method of claim 2, wherein the blank layers are distributed by carrying out a further step of: preheating the blank layer to the preheat temperature; and lowering the build bed by the intended layer thickness.

4. The method of any preceding claim, wherein the object layer cycle further comprises a subset of further object layer cycles for which the layer distance at step (d) is the same as that of the preceding layer, so that an actual layer thickness of each layer of the subset is different to the intended layer thickness.

5. The method of claim 4, wherein the object layer cycle further comprises a subset of further object layer cycles for which the layer distance at step (d) is the same as that of the preceding layer, so that the actual layer thickness is different to and within a predetermined range of the intended layer thickness.

6. The method of claim 4 or claim 5, further comprising the step of determining the number of further object layer cycles of the subset based on at least one of a predetermined layer distance and a resolution in distance by which the build bed is configured to be lowered, and initiating step (d) based on the at least one of the predetermined layer distance and the resolution.

7. The method of any preceding claim, further comprising, between the steps (b) of preheating and (c) of heating, a step of depositing absorption modifier over at least one of an area defining the cross section of the object and an area surrounding the cross section.

8. The method of any preceding claim, further comprising, between the steps (b) of preheating and (c) of heating, a step of depositing radiation absorber over an area within the build bed surface to define the cross section of the object.

9. The method of any preceding claim, wherein a set of layer distances is determined empirically from one or more test objects, and wherein the method further comprises, before step (b): providing the set of layer distances; determining from the set of layer distances the layer distance to be applied at step (d); and applying the determined layer distance at step (d).

10. The method of any one of claims 1 to 8, wherein the layer distance is determined from a model based on one or more build parameters, and wherein the method further comprises, before step (d): determining the layer distance from the model; and applying the determined layer distance at step (d).

11. The method of any preceding claim, wherein the layer distance is based on, or further based on, the number of layers preceding each layer.

12. The method of any preceding claim, wherein the layer distance is based on, or further based on, the density of the particulate material.

13. A controller for an apparatus for the layer-by-layer manufacture of an object from particulate material configured to carry out the method of any one of claims 1 to 12.

14. The controller of claim 13, further configured to receive per-layer layer distance data, and to determine, based on a number of preceding layers, from the per-layer layer distance data, the layer distance to be applied at step (d).

15. The controller of claim 14, wherein the layer distance is further determined based on the density of the particulate material and an aggregate amount of particulate material distributed over the preceding layer cycles.
